(19) Europäisches Patentamt
European Patent Office
Office européen des brevets

(11) **EP 2 128 998 B1**

(12) **FASCICULE DE BREVET EUROPEEN**

(45) Date de publication et mention de la délivrance du brevet:
**16.12.2015 Bulletin 2015/51**

(51) Int Cl.:
*H04B 1/69* (2011.01)    *H04B 1/10* (2006.01)
*H04L 27/00* (2006.01)

(21) Numéro de dépôt: **09161191.3**

(22) Date de dépôt: **27.05.2009**

(54) **Procédé de détection d'un signal OFDM**

Verfahren zur Erfassung eines OFDM-Signals

Method for detecting an OFDM signal

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.05.2008 FR 0853552**

(43) Date de publication de la demande:
**02.12.2009 Bulletin 2009/49**

(73) Titulaire: **Commissariat à l'Énergie Atomique et aux Énergies Alternatives**
**75015 Paris (FR)**

(72) Inventeur: **Jallon, Pierre**
**38100, GRENOBLE (FR)**

(74) Mandataire: **Augarde, Eric et al**
**Brevalex**
**56 Boulevard de l'Embouchure,**
**Bât. B**
**B.P. 27519**
**31075 Toulouse Cedex 2 (FR)**

(56) Documents cités:
**EP-A- 1 655 872    WO-A-2007/050482**

- ZHANG D ET AL: "INTERFERENCE CANCELLATION FOR OFDM SYSTEMS IN PRESENCE OF OVERLAPPED NARROW BAND TRANSMISSION SYSTEM" IEEE TRANSACTIONS ON CONSUMER ELECTRONICS, IEEE SERVICE CENTER, NEW YORK, NY, US, vol. 50, no. 1, 1 février 2004 (2004-02-01), pages 108-114, XP001198115 ISSN: 0098-3063
- GARDNER W A ET AL: "Cyclostationarity: Half a century of research" SIGNAL PROCESSING, ELSEVIER SCIENCE PUBLISHERS B.V. AMSTERDAM, NL, vol. 86, no. 4, 1 avril 2006 (2006-04-01), pages 639-697, XP024997648 ISSN: 0165-1684 [extrait le 2006-04-01]
- ISHII H ET AL: "OFDM Blind Parameter Identification in Cognitive Radios" PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 1, 11 septembre 2005 (2005-09-11), pages 700-705, XP010926374 ISBN: 978-978-38007-2-4

## Description

### DOMAINE TECHNIQUE

La présente invention concerne le domaine de la détection de la présence d'un signal OFDM. Elle trouve notamment application dans les systèmes radio opportunistes.

### ÉTAT DE LA TECHNIQUE ANTÉRIEURE

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB (*Ultra Wide Band*). La seconde consiste à utiliser de manière opportuniste une partie du spectre ponctuellement ou temporairement inoccupée, c'est la voie dite de radio opportuniste (ou *Cognitive Radio*). On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Le principe de la radio opportuniste a été notamment retenu pour le développement des réseaux sans fil à longue portée encore dénommés WRAN (*Wireless Regional Area Network*). Ces réseaux font actuellement l'objet d'un processus de standardisation au sein du groupe de travail de IEEE 802.22. Plus précisément, cette norme en cours d'élaboration propose d'utiliser de manière opportuniste les bandes UHF et VHF vacantes pour réaliser une transmission sans fil point à point dans un réseau WRAN. Il est en particulier prévu que les bandes UHF allouées au système de télévision à diffusion par voie terrestre DVB-T (*Digital Video Broadcast-Terrestrial*) puissent être utilisées à cette fin. La norme DVB-T fait appel à une modulation OFDM (*Orthogonal Frequency Division Multiplexing*) pour transmettre des flux vidéo/audio compressés. On trouvera une introduction à la norme IEEE 802.22 dans l'article de C. Cordeiro et al. intitulé « IEEE 802.22 : an introduction to the first wireless standard base on cognitive radios », publié dans Journal of Communications, Vol. 1, N°1, Avril 2006, pp. 38-47.

Avant de pouvoir émettre dans une bande UHF donnée, il est nécessaire qu'un émetteur du réseau WRAN puisse déterminer si un signal OFDM est présent dans cette bande, et le cas échéant, d'en estimer les paramètres temporels tels que la longueur du préfixe, la longueur utile ou de la longueur totale du symbole OFDM.

L'article de P. Liu et al. intitulé « A blind time-parameters estimation scheme for OFDM in multi-path channel » publié dans Proc. 2005 Int'l Conference on Wireless Communications Networking and Mobile Computing, 23-26 Sept. 2005, Vol. 1, pp. 242-247 décrit une méthode de détection de la présence d'un signal OFDM et d'estimation aveugle de ses paramètres temporels, grâce au calcul d'une fonction de corrélation pour une pluralité de longueurs de corrélation (c'est-à-dire d'écarts temporels). Par estimation aveugle (*blind estimation*), on entend que le terminal opportuniste n'a aucune connaissance *a priori* des paramètres temporels du signal OFDM.

La demande européenne EP 1 655 872 A1 concerne un système de télécommunication de type opportuniste dont l'émetteur est capable de changer de manière adaptative de système de transmission (TDMA, OFDM, CDMA). Dans un mode de réalisation *(cf. alinéas [68]-[70])*, l'émetteur détecte la présence ou l'absence d'un signal OFDM dans une bande à partir de la cyclostationnarité du signal reçu dans cette bande.

La demande internationale WO 2007/050482 A2 concerne une méthode pour calibrer un filtre passe-bande dans un émetteur/récepteur UWB. Selon cette méthode, on injecte un signal LO en amont du filtre passe-bande. Le filtre passe-bande est ajusté en fonction du signal filtré, convertit en bande de base, démodulé et échantillonné, et de la fréquence du signal LO. Dans un mode de réalisation (cf. page 5, lignes 20-25), le réglage optimal du filtre passe-bande est obtenu lorsque l'on maximise la réjection de certains canaux.

L'article de Zhang et al. intitulé «Interference Cancellation for OFDM Systems in Presence of Overlapped Narrow Band Transmission System», publié dans IEEE Transactions on Consumer Electronics, vol. 50, n° 1, février 2004, pp. 108-114 décrit une méthode de suppression d'interférence à bande étroite (raie interférente) dans un système OFDM. Les caractéristiques de la raie sont estimées à partir du signal reçu sur les sous-porteuses non modulées et le signal interférent est éliminé par soustraction dans le domaine fréquentiel.

Toutefois, la détection d'un signal OFDM et l'estimation subséquente de ses paramètres temporels peuvent être entachées d'erreur en présence d'un signal interférent dans la bande de fréquence d'intérêt. Ainsi, le terminal opportuniste peut conclure indûment à la présence d'un signal OFDM et s'abstenir dans une bande pourtant disponible. Réciproquement, le terminal peut conclure par erreur à l'absence d'un signal opportuniste et transmettre alors dans une bande occupée par le système primaire, avec les risques d'interférence que cette transmission peut occasionner.

Un premier but de la présente invention est de proposer une méthode permettant de déterminer avec une fiabilité accrue si un signal OFDM est présent ou absent dans une bande de fréquence d'intérêt ce, même en présence d'un signal interférent dans cette bande.

## EXPOSÉ DE L'INVENTION

La présente invention est définie par une méthode de détection de présence d'un signal OFDM dans un signal reçu, selon laquelle ledit signal reçu est transposé en bande de base et soumis à un filtrage passe-bande correspondant à une bande d'intérêt avant d'être échantillonné. Le signal ainsi échantillonné subit un second filtrage destiné à supprimer au moins une raie interférente dans la bande d'intérêt et la présence d'un signal OFDM est détectée si le signal filtré par le second filtrage est cyclostationnaire.

Pour déterminer la/les raie(s) interférente(s), on calcule avantageusement la densité spectrale du signal échantillonné, on détermine ensuite la valeur moyenne $m$ et la variance $\sigma^2$ de cette densité spectrale, puis l'on détermine les points du spectre dont l'amplitude est supérieure à $m+\lambda\sigma^2$, où $\lambda$ est supérieur à 1.

Selon une première variante, le second filtrage est un filtrage passe-bande éliminant la/les raie(s) interférente(s).

Selon une seconde variante, le second filtrage est un filtrage coupe-bande(s) éliminant la/les raie(s) interférente(s).

Les fonctions de transfert élémentaires des différents filtres coupe-bandes sont obtenues en déterminant pour chaque point $x$ du spectre dont la valeur de densité spectrale excède $m+\lambda\sigma^2$, le premier point à sa droite, $x^+=x+\varepsilon_d$, ainsi que le premier point à sa gauche $x^-=x-\varepsilon_g$ dont la valeur de densité spectrale est égale à m, la fonction de transfert élémentaire correspondante étant adaptée à réjecter la bande de fréquences $[x^-x^+]$.

Selon une troisième variante, le second filtrage comprend une étape de décimation du dit signal échantillonné.

Selon un premier mode de réalisation de la méthode de détection, on calcule la fonction d'autocorrélation $Rs_a(t,\tau)$ du signal filtré par le second filtrage et l'on détermine la valeur $\tau_{max}$ de l'écart temporel correspondant au maximum de la fonction d'autocorrélation, la présence d'un signal OFDM étant détectée si $Rs_a(t,\tau_{max})$ présente une périodicité en temps.

On détermine ensuite si $Rs_a(t,\tau_{max})$ présente une périodicité en temps en effectuant la transformée de Fourier du signal filtré par le second filtrage et en comparant l'amplitude d'une raie fondamentale du spectre obtenu à une valeur de seuil prédéterminé.

Selon un second mode de réalisation de la méthode de détection, on calcule les coefficients de corrélation cyclique $\rho_a^{k/(\alpha+\beta)}(\tau)$ du signal filtré par le second filtrage où $\frac{k}{\alpha+\beta}$, $k \in z$ sont les fréquences cycliques et $\tau$ est un écart temporel, puis on calcule une fonction de discrimination $J(\alpha,\beta)=\sum_{k=0}^{K-1}\left|\rho_a^{k/(\alpha+\beta)}(\alpha)\right|^2$ où $K$ est une valeur entière strictement supérieure à 1.

La présence d'un signal OFDM est détectée si le maximum de la fonction d'autocorrélation $(J(\hat{\alpha},\hat{\beta}))$ est supérieur à un seuil prédéterminé $(J_0)$.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente un exemple de spectre d'un signal DVB-T transposé en bande de base ;
La Fig. 2 représente un premier exemple de filtrage spécifique du signal de la Fig. 1, préalablement à une recherche de cyclostationnarité ;
La Fig. 3 représente un second exemple de filtrage spécifique du signal de la Fig. 1, préalablement à une recherche de cyclostationnarité ;
La Fig. 4 illustre le traitement du signal de la Fig. 1 par une première méthode de détection ;
La Fig. 5 illustre le traitement du signal de la Fig. 1 par une seconde méthode de détection.

## EXPOSÉ DÉTAILLÉ DE MODES DE RÉALISATION PARTICULIERS

Nous considèrerons dans la suite un terminal d'un système radio opportuniste souhaitant déterminer si un signal OFDM est présent ou absent dans une bande de fréquence d'intérêt.

Le terminal en question peut être par exemple un émetteur d'un réseau WRAN recherchant une bande disponible dans le spectre DVB-T. On rappelle que le spectre DVB-T utilisé par la TNT (Télévision Numérique Terrestre) utilise les canaux UHF 21 à 69 (occupant la bande spectrale de 470 à 862 MHz), chaque canal présentant une largeur de bande de 8 MHz.

Lorsque le terminal opportuniste souhaite déterminer si une bande d'intérêt, c'est-à-dire dans l'exemple précédent, un des canaux UHF, est occupé par un signal OFDM, le terminal opportuniste démodule le signal reçu à la fréquence centrale de la bande d'intérêt, c'est-à-dire à la fréquence correspondante du canal dans l'exemple précité. Le signal ainsi transposé en bande de base est ensuite filtré à l'aide d'un filtre passe-bande correspondant à la largeur de la bande d'intérêt (-4MHz à +4MHz pour un des canaux UHF), puis échantillonné à la fréquence de Nyquist du signal ainsi filtré (par exemple 8 Mhz).

Alors que les méthodes de détection selon l'état de la technique recherchent si le signal ainsi obtenu présente un cyclostationnarité, autrement dit si la fonction d'autocorrélation de ce signal présente une périodicité, la présente invention applique un filtrage spécifique avant de procéder à cette recherche.

Plus précisément, ledit filtrage spécifique peut être un filtrage passe-bande, un filtrage réjecteur de bande, ou encore être obtenu par décimation du signal échantillonné.

De manière surprenante, il a été noté, que le fait d'opérer un filtrage passe-bande ou réjecteur de bande pour éliminer une ou des raie(s) interférente(s) au sein de la bande d'intérêt n'altérait pas de manière significative les propriétés de cyclostationnarité du signal OFDM. L'élimination des raies interférentes réduit considérablement la probabilité de fausse détection d'un signal OFDM (détection d'un tel signal alors qu'il est en fait absent, absence de détection d'un tel signal alors qu'il est effectivement présent) tout en conservant sensiblement ses propriétés de cyclostationnarité. En outre, si l'étape de détection conclut à la présence d'un signal OFDM dans la bande d'intérêt, il est possible d'estimer avec une fiabilité accrue les paramètres temporels à partir du signal ayant subi ledit filtrage spécifique.

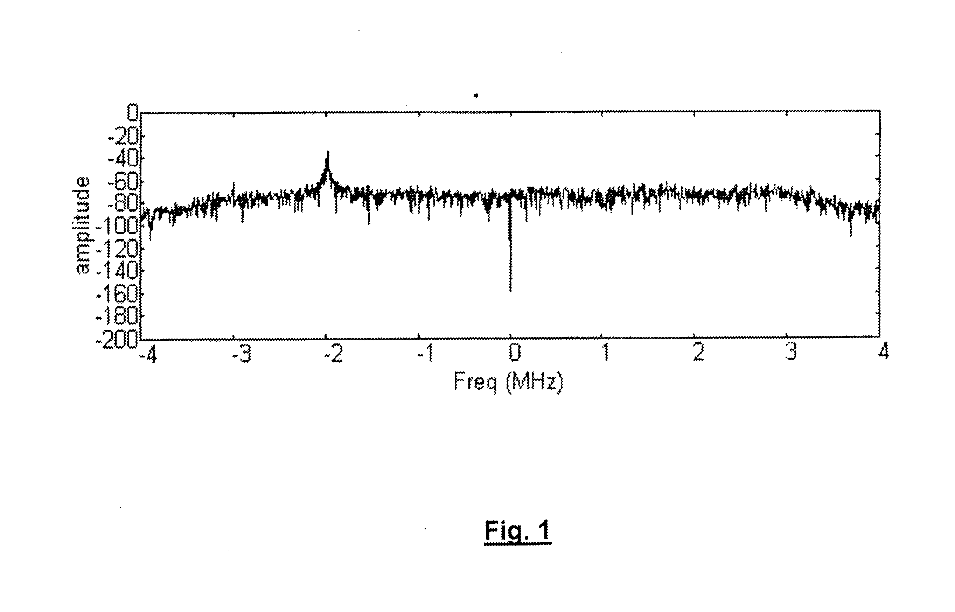

La Fig. 1 représente un exemple typique de spectre d'un signal DVB-T dans un canal UHF, transposé en bande de base. Le spectre s'étend de -4 MHz à +4 MHz et comporte une raie de signal interférent à -2MHz. Cette raie peut être due par exemple à un signal TV analogique.

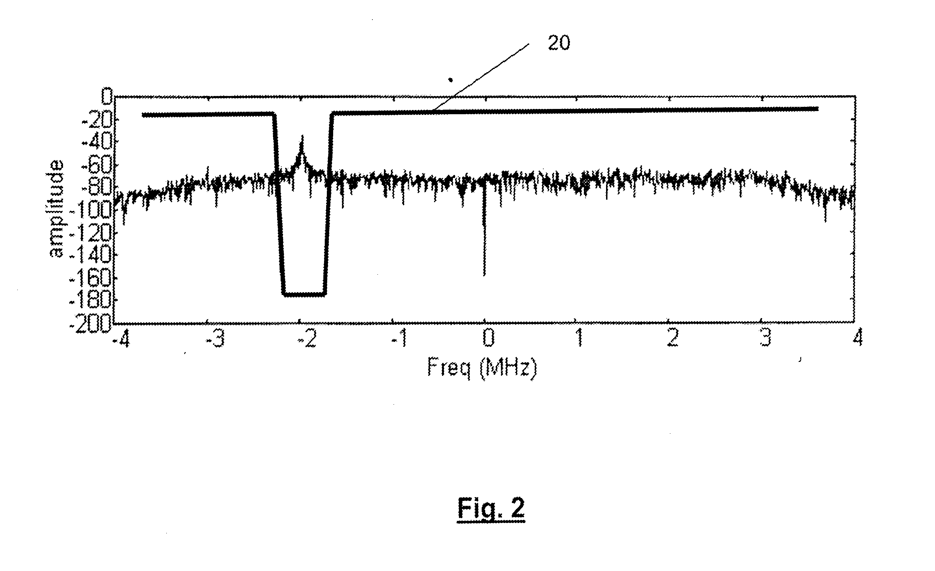

La Fig. 2 représente schématiquement un premier exemple de filtrage spécifique du signal de la Fig. 1. Le filtre est ici un filtre coupe-bande ou réjecteur de fréquence, centré sur la raie interférente. La fonction de transfert du filtre est indiquée par la référence 20. Si plusieurs raies interférentes sont présentes, on peut effectuer une réjection des différentes raies interférentes en question.

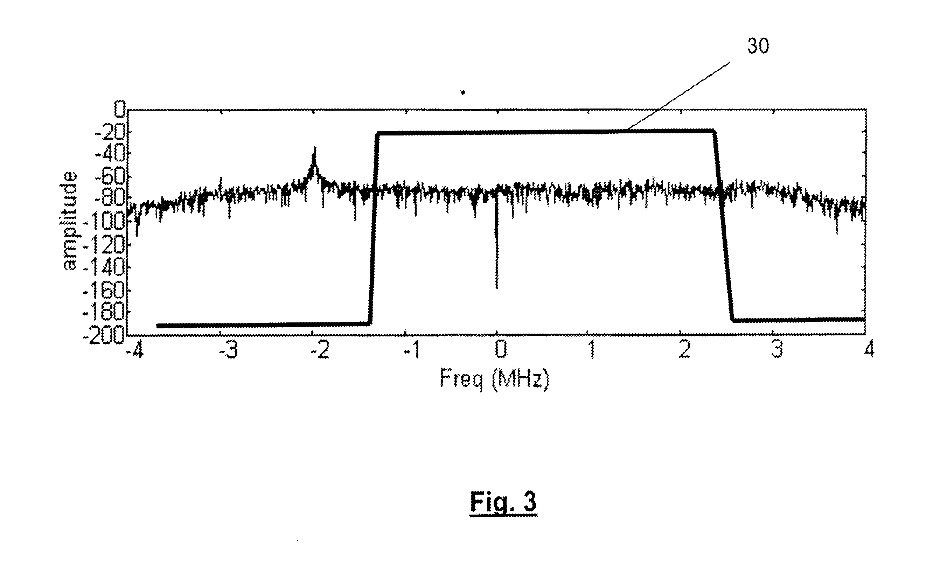

La Fig. 3 représente schématiquement un second exemple de filtrage spécifique du signal de la Fig. 1. Le filtre est ici un filtre passe-bande éliminant la raie interférente. En pratique pour les signaux DVB-T, on remarque que les raies interférentes se situent entre -3 MHz et -2MHz. On utilise alors avantageusement un filtre passe-bande dont la bande passante s'étend de -1,5MHz à 2,5MHz, comme indiqué par la fonction de transfert 30.

Si plusieurs raies interférentes sont présentes, on choisit un filtre passe-bande ne gardant que la partie du spectre du signal non affectée par ces raies interférentes.

De manière générale, si le terminal opportuniste connaît les fréquences des raies interférentes, ces raies seront réjectées par un filtre coupe-bande(s) ou, alternativement le signal transposé en bande de base sera filtré par un filtrage passe-bande les éliminant.

A défaut de connaître *a priori* les raies interférentes, le terminal peut déterminer leurs positions spectrales en procédant comme suait :

Dans un premier temps, on estime la densité spectrale de puissance du signal transposé en bande de base échantillonné, par exemple au moyen d'une transformée de Fourier (FFT) dont on calcule ensuite le module au carré.

On détermine ensuite la moyenne et la variance du module de cette densité spectrale soit m et $\sigma^2$, respectivement.

On recherche ensuite les points du spectre dont la valeur de densité spectrale est supérieure à la valeur $m+\lambda\sigma^2$ où $\lambda$ est un réel supérieur à 1, par exemple égal $\lambda$=3. Soit $S$, l'ensemble des points de cette liste.

Pour chaque point $x\in S$, on détermine le premier point à droite $x^+=x+\varepsilon_d$ ainsi que le premier point à gauche $x^-=x-\varepsilon_g$ dont la valeur de densité spectrale est égale à $m$.

Selon une première variante, on choisit ensuite un filtre passe-bande qui élimine les fréquences

$$\bigcup_{x\in S}\left[x^-x^+\right].$$

Selon une seconde variante, on détermine pour chaque fréquence $x\in S$, la fonction de transfert $H_x$ d'un filtre rejetant la bande [$x^-x^+$] et l'on utilise en définitive un filtre coupe-bande(s) de fonction de transfert $\prod_{x\in S}H_x$.

Selon une troisième variante, alternative à un filtrage passe-bande ou coupe-bande(s), on pourra effectuer un filtrage par décimation du signal échantillonné. On choisira alors convenablement le taux de décimation pour éliminer les raies interférentes. Par exemple, si le signal en bande base est dans la bande [-4MHz 4MHz] et a été échantillonné à la fréquence de Nyquist (8MHz), et si la raie interférente a été déterminée comme étant à -2MHz, on choisira un taux de décimation de 4. Le signal échantillonné ainsi décimé est alors dans la bande [-1MHz 1MHz] et ne satisfait plus le critère de Nyquist. Cependant, le repliement de la raie interférente due au sous échantillonnage se fait sur la fréquence nulle. De manière générale si la raie interférente se trouve à $\pm f_{int}$ dans la bande [-$B$,+$B$] du signal en bande de base on échantillonnera à la fréquence $f_{int}$, c'est-à-dire que l'on effectuera un filtrage par décimation au taux $2B/f_{int}$ pour obtenir en définitive un signal dans la bande [-$f_{int}$,+$f_{int}$].

Le repliement des images de la raie interférente sur la fréquence nulle n'affecte pas les propriétés de cyclostationnarité du signal.

La détection de signal OFDM se fait à partir des propriétés de cyclostationnarité du signal filtré. Plus précisément, on détectera la présence d'un signal OFDM dans la bande d'intérêt si ledit signal filtré, et donc dépourvu de la(les) raie(s) interférente(s), est cyclostationnaire.

La fonction d'autocorrélation du signal filtré peut s'exprimer sous la forme :

$$Rs_a\left(t,\tau\right) = \mathcal{E}\left\{s_a(t)s_a^*(t-\tau)\right\} \tag{1}$$

où E{.} désigne l'espérance mathématique, $s_a(t)$ le signal filtré et $\tau$ l'écart temporel pour lequel on calcule la corrélation.

Selon une première méthode de détection, on recherche la valeur $\tau_{max}$ de l'écart temporel qui correspond au maximum de la fonction d'autocorrélation $Rs_a(t,\tau)$, éventuellement normalisée. Si un signal OFDM est présent dans le signal reçu, on peut montrer que la valeur $\tau_{max}$ correspond à la durée de signal utile du symbole OFDM. $Rs_a(t,\tau_{max})$ est alors une fonction périodique en t et de périodicité égale à la longueur $T_s$ des symboles OFDM. Le spectre de $Rs_a(t,\tau_{max})$ est donc un spectre de raies espacées de $1/T_s$, la raie fondamentale étant située à $1/T_s$.

La première méthode de détection détermine la présence d'un signal OFDM si une périodicité existe dans $Rs_a(t,\tau_{max})$ ou, si l'amplitude de la raie fondamentale dans le spectre de $Rs_a(t,\tau_{max})$ excède un seuil prédéterminé.

La seconde méthode de détection a été exposée en détail dans la demande de brevet n° 07 55394 déposée le 31.05.2007 par la présente demanderesse et est simplement rappelée pour l'essentiel ci-après.

Selon cette méthode, on calcule les coefficients de corrélation cyclique $\rho_a^{k/(\alpha+\beta)}\left(\tau\right)$ définis par :

$$\rho_a^{k/(\alpha+\beta)}\left(\tau\right) = \lim_{T\to\infty}\frac{1}{T}\int_0^T Rs_a\left(t,\tau\right)e^{-2i\pi\frac{kt}{\alpha+\beta}} = \left\langle Rs_a\left(t,\tau\right)e^{-2i\pi\frac{kt}{\alpha+\beta}}\right\rangle_t \tag{2}$$

où les $\frac{k}{\alpha+\beta}$, $k \in z$ sont les fréquences cycliques et $\langle.\rangle_t$ désigne la moyenne temporelle. La fonction d'autocorrélation se décompose alors de la manière suivante :

$$Rs_a\left(t,\tau\right) = \sum_k \rho_a^{k/(\alpha+\beta)}\left(\tau\right)e^{2i\pi\frac{kt}{\alpha+\beta}} \tag{3}$$

On définit une fonction de discrimination par :

$$J\left(\alpha,\beta\right) = \sum_{k=0}^{K-1}\left|\rho_a^{k/(\alpha+\beta)}\left(\alpha\right)\right|^2 \tag{4}$$

où $K$ est une valeur entière strictement supérieure à 1, indiquant le nombre de fréquences cycliques que l'on prend en compte dans l'estimation. Cette fonction de discrimination permet de déterminer si, pour un écart temporel $\tau=\alpha$ donné, la fonction d'autocorrélation présente en fonction du temps des pics se répétant avec une périodicité $\alpha+\beta$.

En présence d'un signal OFDM de paramètres temporels $T_u$ et $T_s = T_u + T_p$, où $T_u$ est la durée utile, $T_p$ la durée du préfixe et $T_s$ la durée des symboles OFDM, la fonction de discrimination $J(\alpha,\beta)$ présentera un maximum $J$ pour $\alpha=T_u$ et $\beta=T_p$. Ce maximum sera sensiblement supérieur au maximum $J_0$ qui serait atteint par la fonction $J(\alpha,\beta)$ en absence

de signal OFDM.

De manière générale, la présence d'un signal OFDM sera détectée s'il existe un couple de valeurs $\alpha$ et $\beta$ telles que $J(\alpha,\beta) > J_0$.

On notera qu'à la différence de la première méthode de détection qui procède en deux étapes successives, en estimant tout d'abord la longueur utile $T_u$ puis la longueur totale $T_s$ des symboles OFDM, la seconde méthode de détection opère conjointement sur ces deux paramètres et est, pour cette raison, plus résistante au bruit.

En pratique, on calcule les coefficients de corrélation cyclique sur une longueur de fenêtre finie $U$, à partir du signal échantillonné, soit :

$$\rho^{k/(\tilde{\alpha}+\tilde{\beta})}(\tilde{\alpha}) = \frac{1}{U}\sum_{u=0}^{U-1} s_a(u)\, s_a^*(u-\tilde{\alpha})\, e^{-2i\pi\frac{k}{\tilde{\alpha}+\tilde{\beta}}} \qquad (5)$$

dans lequel on a défini les valeurs réduites $\tilde{\alpha} = \dfrac{\alpha}{T_e}$ et $\tilde{\beta} = \dfrac{\beta}{T_e}$ où $T_e$ est la période d'échantillonnage.

On notera que si le signal échantillonné est décimé, $T_e$ est la période d'échantillonnage après décimation. La décimation ne modifie pas la position des raies de $Rs_a(t,\tau_{max})$ pour autant que $\tau_{max} \gg T_e$.

On déduit la fonction de discrimination à partir de l'expression (4), soit :

$$J(\tilde{\alpha},\tilde{\beta}) = \sum_{k=0}^{K-1} \left| \frac{1}{U}\sum_{u=0}^{U-1} s_a(u)\, s_a^*(u-\tilde{\alpha})\, e^{-2i\pi\frac{k}{\tilde{\alpha}+\tilde{\beta}}} \right|^2 \qquad (6)$$

Ou, de manière équivalente, par simple translation de $\alpha$ :

$$J(\tilde{\alpha},\tilde{\beta}) = \sum_{k=0}^{K-1} \left| \frac{1}{U}\sum_{u=0}^{U-1} s^*(u)\, s(u+\tilde{\alpha})\, e^{-2i\pi\frac{k}{\tilde{\alpha}+\tilde{\beta}}} \right|^2 \qquad (7)$$

On détermine ensuite les paramètres $\hat{\alpha}$ et $\hat{\beta}$ qui maximisent la fonction de discrimination. On conclut à la présence d'un signal OFDM si :

$$J(\hat{\alpha},\hat{\beta}) > J_0 \qquad (8)$$

et, sinon, à l'absence d'un tel signal.

La valeur du seuil $J_0$ peut être déterminée empiriquement à partir des maxima de la fonction de discrimination observés pour des signaux OFDM présentant différents rapports de signal sur bruit.

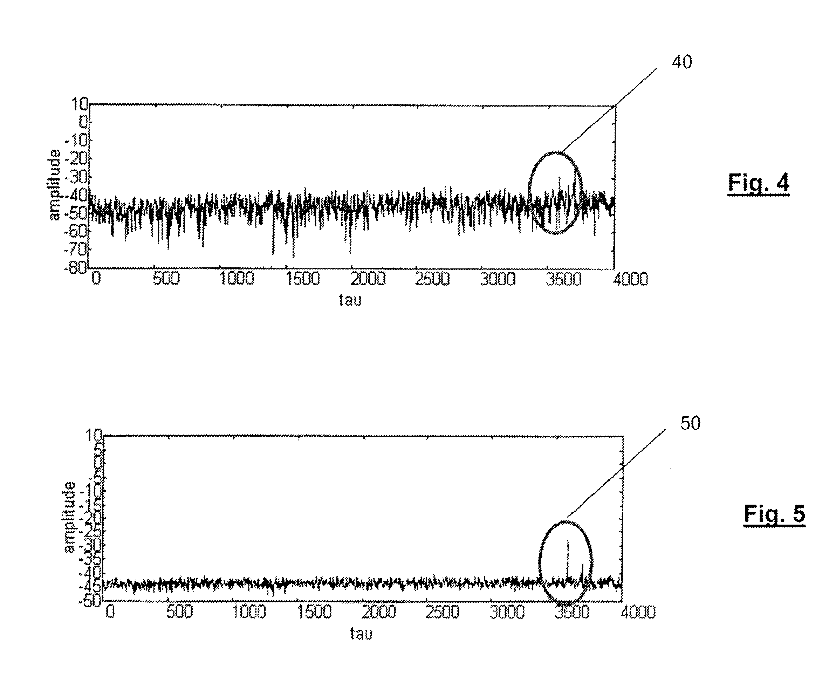

On a illustré en Fig. 4, le spectre de $Rs_a(t,\tau_{max})$ obtenu selon la première méthode de détection, après élimination de la raie interférente à -2MHz du signal illustré en Fig. 1. On voit apparaître (cf. zone entourée 40) un premier pic vers 3520 (en nombre d'échantillons) émergeant du bruit.

De manière similaire on a illustré en Fig. 5, la fonction de discrimination $J(\alpha,\beta)$, obtenue selon la seconde méthode de détection, en fonction de $\alpha+\beta$ pour $\alpha=\hat{\alpha}$. On voit nettement apparaître (cf. zone entourée 50) un pic vers 3500 (nombre d'échantillons) émergeant du bruit.

Dans les deux cas, on peut conclure à la présence d'un signal OFDM de temps symbole correspondant à $3500 \cdot T_e$ dans la bande d'intérêt.

**Revendications**

**1.** Méthode de détection de présence d'un signal OFDM dans un signal reçu dans laquelle ledit signal reçu est transposé en bande de base et soumis à un filtrage passe-bande correspondant à une bande d'intérêt avant d'être échantillonné, **caractérisée en ce que** le signal ainsi échantillonné subit un second filtrage destiné à supprimer au moins une raie interférente dans la bande d'intérêt, et que la présence d'un signal OFDM est détectée si le signal filtré par le second filtrage est cyclostationnaire.

2.  Méthode de détection selon la revendication 1, **caractérisée en ce que** pour déterminer la/les raie(s) interférente(s), on calcule la densité spectrale du signal échantillonné, on détermine ensuite la valeur moyenne $m$ et la variance $\sigma^2$ de cette densité spectrale, puis l'on détermine les points du spectre dont la valeur de densité spectrale est supérieure à $m + \lambda\sigma^2$, où $\lambda$ est supérieur à 1.

3.  Méthode de détection selon la revendication 1 ou 2, **caractérisée en ce que** le second filtrage est un filtrage passe-bande éliminant la/les raie(s) interférente(s).

4.  Méthode de détection selon la revendication 1, **caractérisée en ce que** le second filtrage est un filtrage coupe-bande (s) éliminant la/les raie(s) interférente(s).

5.  Méthode de détection selon la revendication 4, **caractérisée en ce que** les fonctions de transfert élémentaires des différents filtres coupe-bandes sont obtenues en déterminant pour chaque point $x$ du spectre dont la valeur de densité spectrale excède $m + \lambda\sigma^2$, le premier point à sa droite, $x^+ = x + \varepsilon_d$, ainsi que le premier point à sa gauche $x^- = x - \varepsilon_g$ dont la valeur de densité spectrale est égale à $m$, la fonction de transfert élémentaire correspondante étant adaptée à réjecter la bande de fréquences $[x^-x^+]$.

6.  Méthode de détection selon la revendication 1 ou 2, **caractérisée en ce que** le second filtrage comprend une étape de décimation du dit signal échantillonné.

7.  Méthode de détection selon l'une des revendications précédentes, **caractérisée en ce que** l'on calcule la fonction d'autocorrélation $Rs_a(t,\tau)$ du signal filtré par le second filtrage et que l'on détermine la valeur $\tau_{max}$ de l'écart temporel correspondant au maximum de la fonction d'autocorrélation, la présence d'un signal OFDM étant détectée si $Rs_a(t,\tau_{max})$ présente une périodicité en temps.

8.  Méthode de détection selon la revendication 7, **caractérisée en ce que** l'on détermine que $Rs_a(t,\tau_{max})$ présente une périodicité en temps en effectuant la transformée de Fourier du signal filtré par le second filtrage et en comparant l'amplitude d'une raie fondamentale du spectre obtenu à une valeur de seuil prédéterminé.

9.  Méthode de détection selon l'une des revendications 1 à 6, **caractérisée en ce que** l'on calcule les coefficients de corrélation cyclique $\rho_a^{k/(\alpha+\beta)}(\tau)$ du signal filtré par le second filtrage où $\frac{k}{\alpha+\beta}$, $k \in \mathbb{Z}$ sont les fréquences cycliques et $\tau$ est un écart temporel, puis que l'on calcule une fonction de discrimination $J(\alpha,\beta) = \sum_{k=0}^{K-1} \left| \rho_a^{k/(\alpha+\beta)}(\alpha) \right|^2$ où $K$ est une valeur entière strictement supérieure à 1.

10. Méthode de détection selon la revendication 9, **caractérisée en ce que** la présence d'un signal OFDM est détectée si le maximum de la fonction d'autocorrélation $(J(\hat{\alpha},\hat{\beta}))$ est supérieur à un seuil prédéterminé $(J_0)$.

**Patentansprüche**

1.  Verfahren zur Erfassung des Vorhandenseins eines OFDM-Signals in einem empfangenen Signal, bei dem das empfangene Signal ins Basisband verschoben und einer Passbandfilterung unterworfen wird, die einem interessierenden Band entspricht, bevor es abgetastet wird, **dadurch gekennzeichnet, dass** das derart abgetastete Signal eine zweite Filterung durchläuft, die dazu ausgelegt ist, wenigstens eine interferierende Linie in dem interessierenden Band zu unterdrücken, und dass das Vorhandensein eines OFDM-Signals erfasst wird, wenn das durch die zweite Filterung gefilterte Signal zyklostationär ist.

2.  Verfahren zur Erfassung nach Anspruch 1, **dadurch gekennzeichnet, dass** man zur Bestimmung des/der interferierenden Linie(n) die spektrale Dichte des abgetasteten Signals berechnet, man anschließend den Mittelwert $m$ und die Varianz $\sigma^2$ dieser spektralen Dichte bestimmt, man dann die Punkte des Spektrums bestimmt, deren Wert der spektralen Dichte größer als $m + \lambda\sigma^2$ ist, wobei $\lambda$ größer als 1 ist.

3. Verfahren zur Erfassung nach Anspruch 1 oder 2, **dadurch gekennzeichnet, dass** die zweite Filterung eine Passbandfilterung ist, die die interferierende(n) Linie(n) entfernt.

4. Verfahren zur Erfassung nach Anspruch 1, **dadurch gekennzeichnet, dass** die zweite Filterung eine Bandsperrfilterung ist, die die interferierende(n) Linie(n) beseitigt.

5. Verfahren zur Erfassung nach Anspruch 4, **dadurch gekennzeichnet, dass** die elementaren Transferfunktionen der verschiedenen Bandsperrfilter erhalten werden, indem man für jeden Punkt $x$ des Spektrums, dessen Wert der spektralen Dichte größer ist $m + \lambda\sigma^2$ den ersten Punkt zu seiner Rechten bestimmt, $x^+ = x + \varepsilon_d$, sowie den ersten Punkt zu seiner Linken $x^- = x - \varepsilon_g$, deren Wert der spektralen Dichte gleich $m$ ist, wobei die entsprechende elementare Transferfunktion dazu ausgelegt ist, das Frequenzband $[x^-x^+]$ zurückzuweisen.

6. Verfahren zur Erfassung nach Anspruch 1 oder 2, **dadurch gekennzeichnet, dass** die zweite Filterung einen Schritt der Dezimierung des abgetasteten Signals umfasst.

7. Verfahren zur Erfassung nach einem der vorhergehenden Ansprüche, **dadurch gekennzeichnet, dass** man die Autokorrelationsfunktion $Rs_a(t,\tau)$ des durch die zweite Filterung gefilterten Signals berechnet, und dass man den Wert $\tau_{max}$ des zeitlichen Abstands bestimmt, der dem Maximum der Autokorrelationsfunktion entspricht, wobei das Vorhandensein eines OFDM-Signals erfasst wird, wenn $Rs_a(t, \tau_{max})$ eine zeitliche Periodizität aufweist.

8. Verfahren zur Erfassung nach Anspruch 7, **dadurch gekennzeichnet, dass** man bestimmt, dass $Rs_a(t, \tau_{max})$ eine zeitliche Periodizität aufweist, indem man eine Fouriertransformation des durch die zweite Filterung gefilterten Signals durchführt und die Amplitude einer Fundamentallinie des erhaltenen Spektrums mit einem vorbestimmten Schwellenwert vergleicht.

9. Verfahren zur Erfassung nach einem der Ansprüche 1 bis 6, **dadurch gekennzeichnet, dass** man die zyklischen Korrelationskoeffizienten $\rho_a^{k/(\alpha+\beta)}(\tau)$ des durch die zweite Filterung gefilterten Signals berechnet, wobei $\frac{k}{\alpha+\beta} \cdot k \in z$ die zyklischen Frequenzen sind und $\tau$ ein zeitlicher Abstand ist und dass man dann eine Diskriminie-rungsfunktion $J(\alpha,\beta) = \sum_{k=0}^{K-1} \left| \rho_a^{k/(\alpha+\beta)}(\alpha) \right|^2$ berechnet, wobei K ein ganzzahliger Wert ist, der streng größer als 1 ist.

10. Verfahren zur Erfassung nach Anspruch 9, **dadurch gekennzeichnet, dass** das Vorhandensein eines OFDM-Signals erfasst wird, wenn das Maximum der Autokorrelationsfunktion ($J(\hat{\alpha},\hat{\beta})$) größer als eine vorbestimmte Schwelle ($J_0$) ist.

**Claims**

1. Method for detecting the presence of an OFDM signal in a received signal wherein said received signal is frequency down converted into baseband and made subject to a passband filtering corresponding to a band of interest before being sampled, **characterised in that** thus sampled signal is subjected to a second filtering for eliminating at least one interfering line in the band of interest, and that the presence of an OFDM signal is detected if the signal filtered by the second filtering is cyclostationary.

2. Detection method as claimed in claim 1, **characterised in that**, in order to determine the interference line or lines, the spectral density of the sampled signal is calculated, the mean value $m$ and the variance $\sigma^2$ of this spectral density are then determined, and the points on the spectrum are then determined for which the spectral density is greater than $m + \lambda\sigma^2$, where $\lambda$ is greater than 1.

3. Detection method as claimed in claim 1 or 2, **characterised in that** the second filtering is a passband filtering that eliminates the interfering line(s).

4. Detection method as claimed in claim 1, **characterised in that** the second filtering is a band-stop filtering that eliminates the interfering line(s).

5. Detection method as claimed in claim 4, **characterised in that** the elementary transfer functions of the different band-stop filters are obtained by determining for each point x in the spectrum whereof the spectral density value exceeds $m + \lambda\sigma^2$, the first point to the right thereof, $x^+ = x + \varepsilon_d$, and the first point to the left thereof $x^- = x - \varepsilon_g$ for which the spectral density value is equal to $m$, the corresponding elementary transfer value being adapted to reject the frequency band $[x^- x^+]$.

6. Detection method as claimed in claim 1 or 2, **characterised in that** the second filtering includes a step of decimating said sampled signal.

7. Detection method as claimed in one of the previous claims, **characterised in that** the autocorrelation function $Rs_a(t, \tau)$ of the signal filtered by the second filtering is calculated and that the value $\tau_{max}$ of the time interval corresponding to the maximum autocorrelation function is determined, the presence of an OFDM signal being detected if $Rs_a(t, \tau_{max})$ displays a time periodicity.

8. Detection method as claimed in claim 7, **characterised in that** it is determined that $Rs_a(t, \tau_{max})$ displays a time periodicity by performing a Fourier transform of the signal filtered by the second filtering and by comparing the amplitude of a fundamental line of the spectrum obtained against a preset threshold value.

9. Detection method as claimed in one of claims 1 to 6, **characterised in that** the coefficients of cyclical correlation $\rho_a^{k/(\alpha+\beta)}(\tau)$ of the signal filtered by the second filtering are calculated where $\dfrac{k}{\alpha+\beta}$, $k \in \mathbb{Z}$ are the cyclical frequencies and $\tau$ is a time interval, and then **in that** a discrimination function $J(\alpha,\beta) = \displaystyle\sum_{k=0}^{K-1} \left| \rho_a^{k/(\alpha+\beta)}(\alpha) \right|^2$ is calculated where K is a whole value strictly greater than 1.

10. Detection method as claimed in claim 9, **characterised in that** the presence of an OFDM signal is detected if the maximum autocorrelation function ($J(\hat{\alpha},\hat{\beta})$) is above a preset threshold ($J_0$).

EP 2 128 998 B1

Fig. 1

10

20

Fig. 2

**Fig. 3**

EP 2 128 998 B1

Fig. 4

Fig. 5

13

## RÉFÉRENCES CITÉES DANS LA DESCRIPTION

**Documents brevets cités dans la description**

- EP 1655872 A1
- WO 2007050482 A2

- WO 0755394 A

**Littérature non-brevet citée dans la description**

- Cognitive radio : an integrated agent architecture for software defined radio. **J. MITOLA.** PhD Dissertation. Royal Institute of Technology, 08 Mai 2000
- **C. CORDEIRO et al.** IEEE 802.22 : an introduction to the first wireless standard base on cognitive radios. *Journal of Communications,* Avril 2006, vol. 1 (1), 38-47

- **P. LIU et al.** A blind time-parameters estimation scheme for OFDM in multi-path channel. *Proc. 2005 Int'l Conference on Wireless Communications Networking and Mobile Computing,* 23 Septembre 2005, vol. 1, 242-247
- **ZHANG et al.** Interference Cancellation for OFDM Systems in Presence of Overlapped Narrow Band Transmission System. *IEEE Transactions on Consumer Electronics,* Février 2004, vol. 50 (1), 108-114